# EUROPEAN PATENT SPECIFICATION

(11) **EP 4 353 070 B1**
(45) Date of publication and mention of the grant of the patent: **23.07.2025**
(21) Application number: 23203625.1
(22) Date of filing: 13.10.2023
(51) Int. Cl.: A01D 41/14, A01D 45/02

(54) **DAMPING SYSTEMS AND METHODS FOR IMPACT SENSING ON AN AGRICULTURAL HEADER**
DÄMPFUNGSSYSTEME UND VERFAHREN ZUR AUFPRALLERFASSUNG AUF EINEM LANDWIRTSCHAFTLICHEN ERNTEVORSATZ
SYSTÈMES ET PROCÉDÉS D'AMORTISSEMENT POUR DÉTECTION D'IMPACT SUR UNE TÊTE DE COUPE AGRICOLE

(30) Priority: 14.10.2022 US 202263416057 P
(43) Date of publication of application: 17.04.2024
(73) Proprietor: CNH Industrial America LLC, New Holland, PA 17557 (US)
(72) Inventor: HUNT, Cory Douglas, New Holland, 17557 (US); D'AMICANTONIO, Matthew, New Holland, 17557 (US)
(74) Representative: CNH Industrial IP Department

(56) References cited:
- EP-A1- 3 014 973
- DE-A1- 102017 203 950
- US-A1- 2022 000 024

## Description

### BACKGROUND

The present disclosure generally relates to impact sensing on an agricultural header, and more particularly, to damping systems and method that facilitate impact sensing on an agricultural header.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A harvester may be used to harvest crops, such as barley, beans, beets, carrots, corn, cotton, flax, oats, potatoes, rye, soybeans, wheat, or other plant crops. The harvester may be include or be coupled to a header, which may be designed to efficiently harvest certain types of crops. For example, a corn header may be designed to efficiently harvest corn. In particular, the corn header may include row units that include components that operate to separate ears of corn from stalks as the harvester travel through a field. Conveyors (e.g., augers) carry the ears of corn toward processing machinery and/or storage compartments of the harvester, while the stalks are deposited back into the field.

Document EP 3 014 973 A1 discloses an impact sensor system for a header of an agricultural system according to the preamble of claim 1.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the disclosure. Indeed, the disclosure may encompass a variety of forms that may be similar to or different from the embodiments set forth below.

In one embodiment, an impact sensor system for a header of an agricultural system includes a damping feature configured to couple to the header to attenuate vibrations due to initial contact between a crop and the header to form attenuated vibrations. The impact sensor system also includes one or more sensors configured to couple to the header and to generate signals in response to detection of the attenuated vibrations. The impact sensor system further includes a controller configured to receive the signal and process the signals to determine a location of the initial contact between the crop and the header.

In one embodiment, a method includes operating a header to harvest crops as the header travels through a field and damping, via a damping feature coupled to the header, vibrations generated due to an initial contact between a portion of the crops and the header. The method also includes generating, via one or more sensors coupled to the header, signals indicative of the vibrations after the damping via the damping feature. The method further includes processing, via one or more processors, the signals to determine a location of the initial contact between the portion of the crop and the header.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an agricultural system, in accordance with an embodiment of the present disclosure;
FIG. 2 is a perspective side view of a header that may be employed within the agricultural system of FIG. 1, in accordance with an embodiment of the present disclosure;
FIG. 3 is a perspective front view of a portion of the header of FIG. 2, in accordance with an embodiment of the present disclosure;
FIG. 4 is a perspective front view of a portion of the header of FIG. 2, with a divider removed to show a hood between row units, in accordance with an embodiment of the present disclosure;
FIG. 5 is a schematic diagram of a portion of the header of FIG. 2 with sensors, as well as exemplary graphs of signals generated by the sensors, in accordance with an embodiment of the present disclosure;
FIG. 6 is a schematic diagram of a portion of the header of FIG. 2, with a variable damping element and sensors, as well as exemplary graphs of signals generated by the sensors, in accordance with an embodiment of the present disclosure; and
FIG. 7 is a flowchart of a method for determining an impact location on a header, such as the header of FIG. 2, in accordance with an aspect of the present disclosure.

### DETAILED DESCRIPTION

One or more specific embodiments of the present disclosure will be described below. In an effort to provide a concise description of these embodiments, all features of an actual implementation may not be described in the specification.

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may include or be coupled to a header to harvest crops within the field. The header may be a corn header that is designed to efficiently harvest corn within the field. The corn header may include multiple row units across a width of the corn header, each row unit may include deck plates, stalk rollers, and/or other components that operate to separate ears of corn from stalks as the harvester travel through the field. Conveyors (e.g., augers) carry the ears of corn toward processing machinery and/or storage compartments of the harvester, while the stalks are deposited back into the field.

It is presently recognized that it is desirable to determine a location (e.g., an impact location) of initial contact between the ears of corn and the header (e.g., the deck plates) relative to a longitudinal axis of the header. Generally, for good harvesting performance, the ears of corn should make initial contact with the deck plates toward a forward portion of the deck plates relative to the longitudinal axis of the header (e.g., a forward half; forward of a midpoint of the deck plates along the longitudinal axis). This may enable the stalks to be completely discharged from the header before reaching a rear portion of the deck plates, thereby reducing a likelihood of the stalks being fed into the processing machinery and/or storage compartments of the harvester (and thus, reducing an amount of material other than grain [MOG] among the ears of corn).

Accordingly, present embodiments relate generally to an impact sensor system. The impact sensor system may include one or more sensors (e.g., knock sensors; vibration sensors) positioned on the header, and the one or more sensors are configured to generate signals (e.g., data) indicative of the location of the initial contact between the ears of corn and the deck plates. In some embodiments, damping features are utilized in combination with the one or more sensors to facilitate detection of the location of the initial contact between the ears of corn and the deck plates. For example, the damping features may include plastic or other non-metallic components of the row units, such as a hood between adjacent row units along the width of the header. As another example, the damping features may include a variable damping material incorporated into or added onto the row units, such as tapered foam or rubber pads coupled to the deck plates.

The damping features effect a variation in vibrations (e.g., variably alter the vibrations) measured by the one or more sensors as the location of the initial contact with the deck plates relative to the longitudinal axis of the header changes. In particular, the damping features cause greater variation in the vibrations, which results in greater variation in the signals generated by the sensors, as the location of the initial contact with the deck plates relative to the longitudinal axis of the header changes. In turn, this enables reliable and/or accurate assessment of the location of the initial contact with the deck plates (e.g., more reliable and/or accurate as compared to other techniques, such as the use of one or more sensors on metal components of the row units as the metal components provide little amplitude attenuation or delay).

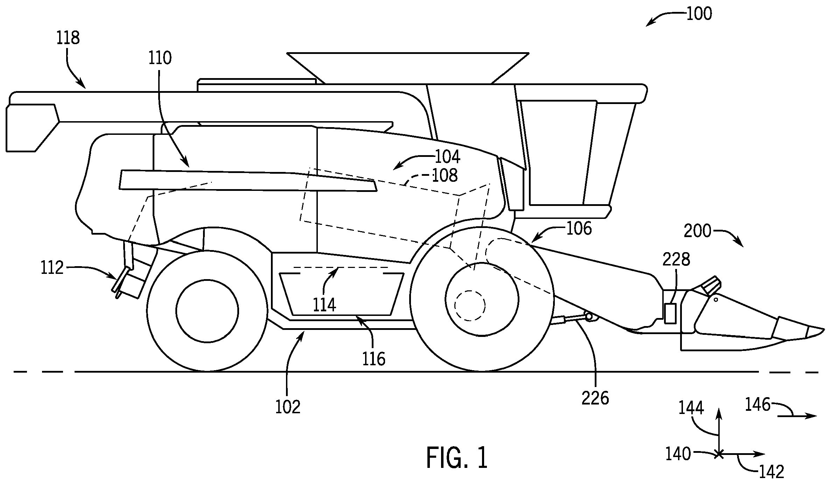

With the foregoing in mind, FIG. 1 is a side view of an embodiment of an agricultural system 100, which may be a harvester. The agricultural system 100 includes a chassis 102 configured to support a header 200 (e.g., a corn header) and an agricultural crop processing system 104. The header 200 is configured to separate a portion of crops (e.g., ears of corn) from stalks and to transport the portion of the crops toward an inlet 106 of the agricultural crop processing system 104 for further processing of the portion of the crops. The header 200 may also return other portions of the crops (e.g., material other than grain [MOG], such as stalks) to a field.

The agricultural crop processing system 104 receives the portion of the crops from the header 200 and separates desired crop material from crop residue. For example, the agricultural crop processing system 104 may include a thresher 108 having a cylindrical threshing rotor that transports the crops in a helical flow path through the agricultural system 100. In addition to transporting the crops, the thresher 108 may separate certain desired crop material (e.g., grain) from the crop residue, such as husks and pods, and may enable the desired crop material to flow into a cleaning system 114 (such as sieves) located beneath the thresher 108. The cleaning system 114 may remove debris from the desired crop material and transport the desired crop material to a storage tank 116 within the agricultural system 100. When the storage tank 116 is full, a tractor with a trailer may pull alongside the agricultural system 100. The desired crop material collected in the storage tank 116 may be carried up by an elevator and dumped out of an unloader 118 into the trailer. The crop residue may be transported from the thresher 108 to a crop residue handling system 110, which may process (e.g., chop/shred) and remove the crop residue from the agricultural system 100 via a crop residue spreading system 112 positioned at an aft end of the agricultural system 100. To facilitate discussion, the header 200 may be described with reference to a lateral axis or direction 140, a longitudinal axis or direction 142, and a vertical axis or direction 144. The agricultural system 100 and/or its components may also be described with reference to a direction of travel 146.

In the illustrated embodiment, the agricultural system 100 may include one or more actuators configured to manipulate the spatial orientation and/or position of the header with respect to the agricultural system chassis, and/or the spatial orientation of the header with respect to the crop rows/ground/soil. A header height actuator 226 may drive the header 200 to move along the direction 144 relative to the ground. The header 200 may be attached to the chassis via a four bar linkage. The position of the four bar linkage may be manipulated by the header height actuator 226 to adjust the height of the header. The agricultural system 100 may also include a header orientation actuator 228. The header orientation actuator 228 may be configured to rotate the angular orientation of the header 200 (e.g., the entire header 200 or a portion thereof) relative to the ground. The actuators may be manipulated in response to one or more stimuli to adjust the agricultural system 100 to one or more environmental variables (e.g., soil condition, terrain, crop damage). As discussed herein, an impact sensor system may include one or more sensors (e.g., knock sensors; vibration sensors) on the header 200, and the impact sensor system may receive and process signals generated by the one or more sensors to determine a location (e.g., impact location) of initial contact between the crop and certain portions (e.g., deck plates) of the header 200 relative to the longitudinal axis 142 of the header 200. In some embodiments, the actuators may be manipulated based on the location of the initial contact.

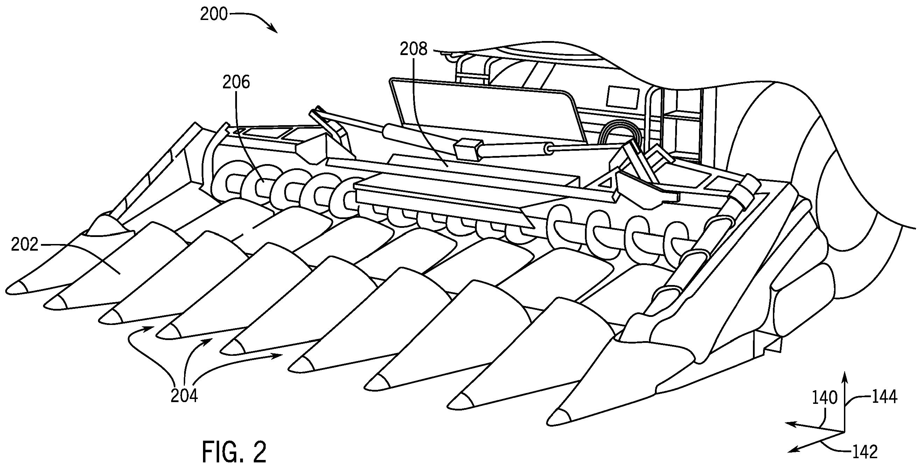

FIG. 2 is a perspective view of an embodiment of the header 200 that may be employed within the agricultural system 100 of FIG. 1. In the illustrated embodiment, the header 200 is a corn header and includes multiple dividers 202 configured to separate rows of a crop (e.g., corn). The dividers 202 may be distributed across a width of the header 200 (e.g., along the lateral axis 140). As the header 200 moves along a path, the dividers 202 may direct the crops from each row to one or more row units 204. The row units 204 are configured to separate a portion of each crop (e.g., an ear of corn from a stalk of each crop), thereby separating the portion of the crop from the soil. The portion of the crop may be directed toward one of a pair of conveyors 206 (e.g., augers) configured to convey the portion of the crop laterally inward to a center crop conveyor 208 at a center of the header 200, and the center crop conveyor 208 directs the portion of the crop toward the inlet of the agricultural crop processing system. As illustrated, the conveyors 206 extend along a substantial portion of the width of the header 200 (e.g., along the lateral axis 140). The conveyors 206 may be driven by a drive mechanism (e.g., electric motor, hydraulic motor). The row units 204 may also return other portions of the crops (e.g., MOG, such as stalks) to the field.

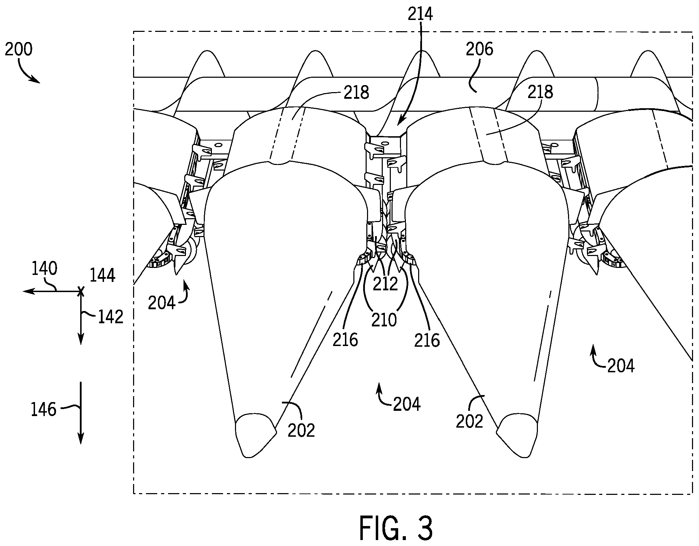

FIG. 3 is a perspective front view of an embodiment of a portion of the header 200. As shown, the portion of the header 200 includes the multiple dividers 202 that direct the crops to one or more row units 204. Each row unit 204 includes various components that operate to separate desired crop material (e.g., the ears of corn) from the stalks, carry the desired crop material toward the conveyors 206, and return the stalks to the field. For example, each row unit 204 may include a pair of stalk rollers 210 that are configured to grip the stalks and rotate in opposite directions to push the stalks toward the field (e.g., vertically downward; below the header 200). Each row unit 204 also includes a pair of deck plates 212 that are positioned over the pair of stalk rollers 210. Each deck plate 212 extends from a first end to a second end along the longitudinal axis 142, and the pair of deck plates 212 are separated from one another along the lateral axis 140 to define a gap 214. Further, each row unit 204 may include a pair of chains 216 (e.g., with lugs) that are configured to drive or push the desired crop material along the pair of deck plates 212 toward the conveyors 206. The pair of deck plates 212 are spaced apart so that the gap 214 is sized to enable the stalks to fall through the gap 214, but to block the desired crop material from falling through the gap 214. Thus, the pair of stalk rollers 210 and the pair of deck plates 212 operate to separate the desired crop material from the stalks (e.g., the pair of stalk rollers 210 push the stalks toward the field, while the desired crop material is blocked from falling through the gap 214 between the pair of deck plates 212). In some embodiments, the pair of deck plates 212 are adjustable and may be driven (e.g., via an actuator) toward and away from one another along the lateral axis 140 to change a size of the gap 214. A hood 218 is positioned rearward of each divider 202 and between adjacent row units 204 to cover various components, such as the actuator that drives the pair of deck plates 212, linkages, and so forth. It should be appreciated that certain hoods 218 (e.g., two hoods 218) may be positioned adjacent to side walls of the header 200, and thus, are positioned adjacent to one row unit 204 and one side wall of the header 200 (e.g., each hood 218 may be positioned adjacent to at least one row unit 204 or pair of deck plates 212).

As noted herein, for good harvesting performance, the crop should make initial contact with the pair of deck plates 212 toward a forward portion of the pair of deck plates 212 relative to the longitudinal axis 142 or the forward direction of travel 146 of the header 200 (e.g., a forward half; forward of a midpoint of the pair of deck plates 212 along the longitudinal axis 142; a target impact region). This may enable the stalks to be completely discharged from the header 200 before reaching a rear portion of the pair of deck plates 212, thereby reducing a likelihood of the stalks being fed into the conveyors 206. Accordingly, an impact sensor system may include one or more sensors (e.g., knock sensors; vibration sensors) on the header 200, and the impact sensor system may receive and process signals generated by the one or more sensors to determine the location of the initial contact between the crop and the pair of deck plates 212 (e.g., along a length of the pair of deck plates 212; between the first end and the second end of the pair of deck plates 212).

Further, the impact sensor system may include a controller (e.g., electronic controller) that receives and processes the signals, determines the location of the initial contact, and then generates an appropriate output. In some embodiments, the appropriate output may include a visual alarm (e.g., presented via a display screen in a cab of the agricultural system; text message with an explanation and/or a recommended adjustment to the header 200) and/or an audible alarm (e.g., presented via a speaker in the cab of the agricultural system). In some embodiments, the appropriate output may include control signals, such as control signals to the actuators to adjust the position and/or the spatial orientation of the header 200 and/or a rotation rate of the pair of stalk rollers 210. For example, in response to the location of the initial contact being rearward of the target impact region of the pair of deck plates (e.g., for some percentage of the crops over some period of time, such as more than 10, 20, 30, 40, or 50 percent over 10, 20, or 30 seconds), the controller may instruct output of the visual alarm and/or the audible alarm, raise the header 200 relative to the chassis of the agricultural system and the ground, and/or reduce an angle between the header and the ground (e.g., rotate the header relative to the chassis of the agricultural system to lift a front end of the header relative to a rear end of the header). In some embodiments, the controller may provide the control signals to manipulate the actuators based on the location of the initial contact, but also accounting for other operational features (e.g., detected loose or flying kernels, detected stalks at the rear end of the pair of deck plates 212) to essentially optimize (e.g., aim to optimize; increase production rates and/or yield of the crop) the harvesting operations. Further, the controller may provide the control signals in response to the respective locations of a particular number (e.g., a threshold number, such as a threshold number or percentage over a period of time, such as more than 10, 20, 30 percent or more over the period of time) of the respective initial contacts being rearward of the target impact region of the pair of deck plates (or across all of the pairs of deck plates on the header 200). Further, the controller 400 may provide the control signals in response to a combined impact location (e.g., an average or median of the respective locations of the initial contacts over some period of time) being outside of the target impact region. In this way, the controller 400 may provide the alarms and/or the control signals in response to the signals indicating undesirable impact locations (e.g., outside of the target impact region), and the control signals are intended to adjust the header 200 to provide or to cause desirable impact locations (e.g., within the target impact region).

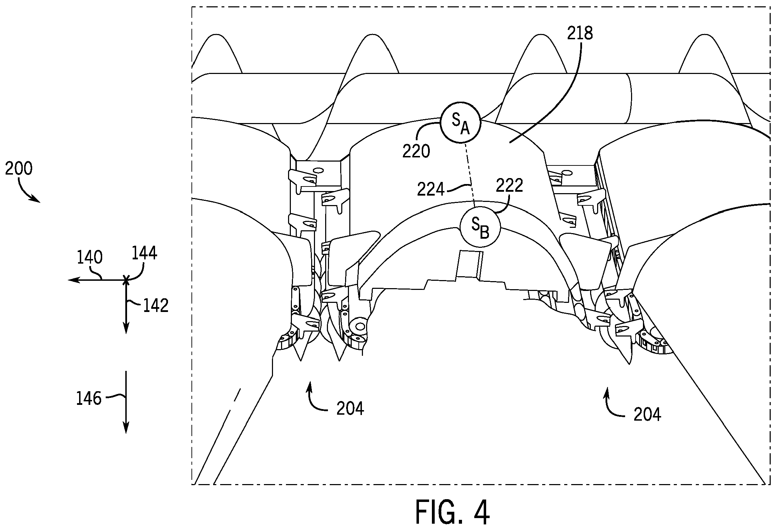

FIG. 4 is a perspective front view of an embodiment of a portion of the header 200, with one of the dividers of between adjacent row units 204 removed to show the hood 218 between the adjacent row units 204. As noted herein, the impact sensor system may include one or more sensors positioned on the header, and the one or more sensors are configured to generate signals indicative of the location of the initial contact between the crop and the pair of deck plates. It is presently recognized that it may be advantageous to use damping features in combination with the one or more sensors to facilitate detection of the location of the initial contact.

With the foregoing in mind, the damping features may include the hood 218, which is formed from a plastic material or other non-metal material. Accordingly, as shown, the impact sensor system may include a first sensor 220 (e.g., knock sensor; vibration sensor) and a second sensor 222 (e.g., knock sensor; vibration sensor) coupled to the hood 218. In particular, the first sensor 220 is coupled to the hood 218 at a first location of the hood 218 (e.g., proximate a rearward edge of the hood 218 relative to the direction of travel 146) and the second sensor 222 is coupled to the hood 218 at a second location of the hood 218 (e.g., proximate a forward edge of the hood 218 relative to the direction of travel 146). Thus, the first sensor 220 and the second sensor 222 are separated from one another by a distance 224 (e.g., along the longitudinal axis 142). The hood 218, which acts as the damping feature, affects a variation in vibrations measured by the first sensor 220 and the second sensor 222 as the location of the initial contact with the pair of deck plates relative to the longitudinal axis 142 of the header 200 changes. In particular, coupling the first and second sensors 220, 222 to the hood 218 causes greater variation in the vibrations (e.g., as compared to coupling the first and second sensors to a metal component, such as the pair of deck plates), which results in greater variation in the signals generated by the first and second sensors 220, 222, as the location of the initial contact with the pair of deck plates relative to the longitudinal axis 142 of the header 200 changes. Because the hood 218 is coupled to the pair of deck plates, the first and second sensors 220, 222 may detect vibrations due to the initial contact between the crop and the pair of deck plates. Further, because the hood 218 is also aligned (e.g., substantially aligned) with the pair of deck plates along the longitudinal axis 142, the crop often strikes the hood 218 during (e.g., at the same, or substantially the same, time) the initial contact between the crop and the pair of deck plates. Indeed, the crop may strike the hood 218 first (e.g., prior to the deck plates 212) to make the initial contact with the header 200. Accordingly, while certain examples herein refer to the initial contact with the deck plates 212 to facilitate discussion, it should be appreciated that this is generally one example of the initial contact with the header 200 that may be measured by the impact sensor system. Further, the respective positions of the first and second sensors 220, 222 relative to the pair of deck plates are known, and this may be taken into account during processing to determine the location of the initial contact. Additionally, placement of the first and second sensors 220, 222 on the hood 218 may enable detection and monitoring of both of the adjacent row units 204 (e.g., instead of using one pair of sensors dedicated to each of the row units 204), thereby providing relatively fewer signals for processing, cost savings, and so forth.

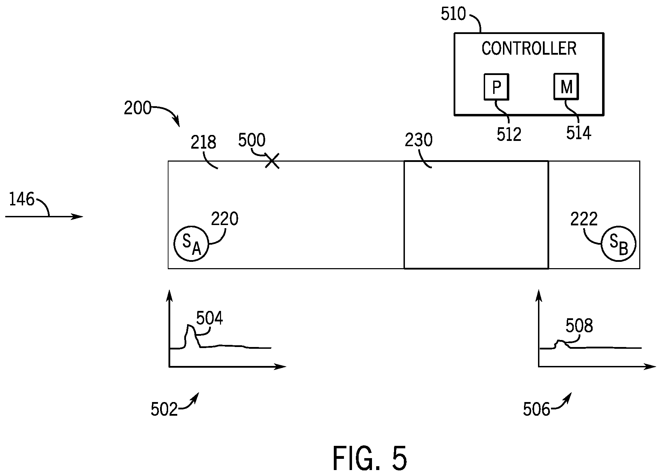

FIG. 5 is a schematic diagram of a portion of the header 200 with sensors, as well as exemplary graphs of signals generated by the sensors. In one embodiment, the portion of the header 200 includes the hood 218, and the sensors include the first sensor 220 and the second sensor 222 coupled to the hood 218. During harvesting operations, the crop may strike and make initial contact with the hood 218 (or some component coupled to the hood 218, such as one of the deck plates) at a location 500 (e.g., impact location). In response to the initial contact, the first sensor 220 and the second sensor 222 detect vibrations and generate respective signals based on the vibrations. For example, the first sensor 220 may generate a first signal shown in a first exemplary graph 502, and the second sensor 222 may generate a second signal shown in a second exemplary graph 506. Because the first sensor 220 is closer to the location 500, a respective amplitude of a first peak 504 of the first signal due to the initial contact is greater than a respective amplitude of a second peak 508 of the second signal due to the initial contact. Advantageously, the hood 218 may attenuate the vibrations (e.g., more attenuation than the metal components, such as the pair of deck plates; form attenuated vibrations), which may increase the variation in the respective amplitudes, which in turn facilitates analysis of the signals and determination of the location 500. It should be appreciated that the hood 218 or other damping features disclosed herein may affect the amplitude and/or a time of travel (e.g., slow down or delay) of the vibrations, and one of both of these factors or characteristics (e.g., the amplitude and/or the time of travel) may be analyzed to determine the location 500.

As shown, the impact sensor system includes a controller 510 (e.g., electronic controller) with a processor 512 and a memory device 514. The controller 510 is communicatively coupled to the first and second sensors 220, 222. The controller 510 receives and processes the signals (e.g., using one or more algorithms; based on a comparison of the first peak 504 to the second peak 508) to determine the location 500 of the initial contact, and then the controller 510 generates an appropriate output. As noted herein, the appropriate output may include the visual alarm and/or the audible alarm. In some embodiments, the appropriate output may include control signals, such as control signals to the actuators to adjust the position and/or the spatial orientation of the header 200 and/or a rotation rate of the pair of stalk rollers. In some embodiments, the controller 510 may not provide the alarm(s) and/or the control signals for each occurrence of the location 500 being outside of a target impact region 230, but instead may record or track each occurrence and trigger the alarm(s) and/or the control signals in response to some percentage of the crops over some period of time striking outside of the target impact region 230, such as more than 10, 20, 30, 40, or 50 percent over 10, 20, or 30 seconds. Further, it should be appreciated that the controller 510 may also receive and account for other inputs (e.g., detected loose or flying kernels, detected stalks at the rear end of the pair of deck plates) to provide the alarm(s) and/or to automatically, dynamically provide the control signals (e.g., with an aim to optimize; increase production rates and/or yield of the crop) the harvesting operations. For example, in some embodiments, the controller 510 may not provide the alarm(s) and/or the control signals if the initial contact of the crop occurs outside of the target impact region 230, but the other inputs indicate that the harvesting operations are proceeding appropriately (e.g., minimal loose or flying kernels and minimal detected stalks at the rear end of the pair of deck plates). Additionally, it should be appreciated that the first and second sensors 220, 222 may be positioned on any suitable portion of the header 200, including other non-metal components (e.g., that provide damping) and/or metal components (e.g., the deck plates; with or without additional damping features applied to the metal components).

The processor 512 may be used to execute software, such as software for processing signals, controlling the agricultural system, and/or controlling the header 200. Moreover, the processor 512 may include multiple microprocessors, one or more "general-purpose" microprocessors, one or more special-purpose microprocessors, and/or one or more application specific integrated circuits (ASICS), or some combination thereof. For example, the processor 512 may include one or more reduced instruction set (RISC) or complex instruction set (CISC) processors. The memory device 514 may include a volatile memory, such as random access memory (RAM), and/or a nonvolatile memory, such as read-only memory (ROM). The memory device 514 may store a variety of information and may be used for various purposes. For example, the memory device 514 may store processor-executable instructions (e.g., firmware or software) for the processor 512 to execute, such as instructions for processing signals, controlling the agricultural system, and/or controlling the header 200. The processor 512 may include multiple processors and/or the memory device 514 may include multiple memory devices. The processor 512 and/or the memory device 514, or the multiple processors and/or the multiple memory devices, may be located in any suitable portion of the agricultural system (e.g., a cab of the agricultural system and/or on the header 200). Further, the controller 514 may be a distributed controller with the multiple processors and/or the multiple memory devices in separate housings or locations (e.g., in the agricultural system, in the header 200, remote, in the cloud).

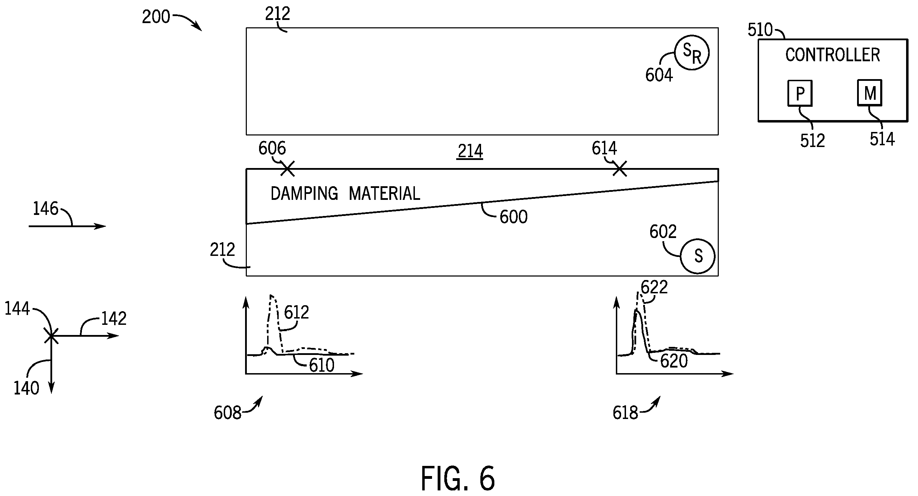

FIG. 6 is a schematic diagram of an embodiment of a portion of the header 200 with a variable damping element 600 and sensors, as well as exemplary graphs of signals generated by the sensors. In one embodiment, the portion of the header 200 includes the pair of deck plates 212 that define the gap 214, and the sensors include a first sensor 602 (e.g., measurement sensor; knock sensor; vibration sensor) and a second sensor 604 (e.g., reference sensor; knock sensor; vibration sensor). As shown, the first sensor 602 may be coupled to one of the deck plates 212, and the second sensor 604 may be coupled to the other one of the deck plates 212. Further, the first sensor 602 and the second sensor 604 may be coupled at corresponding (e.g., matching) locations of their respective deck plates 212 (e.g., along the lateral axis 140 and the longitudinal axis 142; both proximate to the first end or both proximate to the second end; both proximate to a laterally inner edge or both proximate to a laterally outer edge).

The variable damping element 600 may be applied to the deck plate 212 (e.g., under the deck plate 212 relative to the vertical axis 144; between the deck plate 212 and the ground relative to the vertical axis 144). For example, the variable damping element 600 may be a foam or rubber pad (e.g., tapered foam or rubber pad) that is adhered to a bottom surface (e.g., ground-facing surface) of the deck plate 212. The variable damping element 600 may be formed from any of a variety of materials that have a higher damping coefficient than steel, for example. It may also be desirable for the variable damping element 600 to be formed from a material that is durable and that does not absorb water. As shown, the variable damping element 600 may extend from a first end to a second end along the longitudinal axis 142. In some embodiments, the first end of the variable damping element 600 is proximate to the first end of the deck plate 212 and the second end of the variable damping element is proximate to the second end of the deck plate 212. A thickness of the variable damping element 600 varies between the first end and the second end of the variable damping element 600. For example, the variable damping element 600 may have a first, greater thickness at the first end, and a second, lesser thickness at the second end (or vice versa with the first, greater thickness at the second end, and the second, lesser thickness at the first end; variable width along the lateral axis 140). Further, the thickness may change gradually and/or linearly between the first end and the second end of the variable damping element 600.

During harvesting operations, the crop may strike and make initial contact with the deck plates 212 (e.g., both of the deck plates 212), such as at a first location 606 (e.g., impact location). In response to the initial contact, the first sensor 602 and the second sensor 604 detect vibrations and generate respective signals based on the vibrations. For example, the first sensor 602 may generate a first signal with a first peak 610 shown in a first exemplary graph 608. However, the second sensor 604 may generate a second signal with a second peak 612 shown in the first exemplary graph 608.

As the harvesting operations continue, the crop may strike and make initial contact with the deck plates 212 (e.g., both of the deck plates 212), such as at a second location 614 (e.g., impact location). In response to the initial contact, the first sensor 602 and the second sensor 604 detect vibrations and generate respective signals based on the vibrations. For example, the first sensor 602 may generate a third signal with a third peak 620 shown in a second exemplary graph 618. However, the second sensor 604 may generate a fourth signal with a fourth peak 622 shown in the second exemplary graph 618.

The signals generated by the second sensor 604 (e.g., on the deck plate 212 that is devoid of the variable damping element 600) act as reference signals to enable the controller 510 to account for variations that might occur due to changes in size of the crop, stalk roll speed, and so on. As shown to facilitate discussion, for similar impacts (e.g., force) at the first and second locations 606, 614, the signals generated by the second sensor 604 generates the second signal with the second peak 612 and the fourth signal with the fourth peak 622, respectively. Further, the second peak 612 and the fourth peak 622 may have substantially similar amplitudes. However, for the similar impacts (e.g., force) at the first and second locations 606, 614, the first sensor 602 generates the first signal with the first peak 610 and the third signal with the third peak 620, respectively. Further, the first peak 610 and the third peak 620 have substantially different amplitudes due to the variable damping element 600 (e.g., due to the difference in the thickness of the variable damping element 600 between the first location 606 and the second location 614; a level of damping varies with position along the deck plates 212; variably attenuate vibrations). As noted herein, the reference signal may be used to scale, adjust, or otherwise account for the changes in size of the crop, stalk roll, speed, and so on so that the peaks in the signals generated by the first sensor 602 can be analyzed to accurately determine the location of the initial contact between the crop and the deck plates 212. It should be appreciated that the variable damping element 600 disclosed herein may variably alter the amplitude and/or a time of travel (e.g., slow down or delay) of the vibrations, and one of both of these factors or characteristics (e.g., the amplitude and/or the time of travel) may be analyzed to determine the first location 606 and the second location 614.

The controller 510 receives and processes the signals (e.g., using one or more algorithms) to determines the locations of the respective initial contacts, and then the controller 510 generates an appropriate output as described herein (e.g., with reference to FIG. 5). It should be appreciated that the first and second sensors 602, 604 may be positioned proximate to either the first end or the second end of the deck plates 212, and thus, either the first end or the second end of the variable damping element 600. Further, the variable damping element 600 may be incorporated into and/or coupled to any suitable component of the header 200, including the hood. For example, the hood may be molded to have a gradually changing thickness between the first end and the second end of the hood to thereby provide the variable damping element, or the foam or rubber pad may be coupled to the hood to provide the variable damping element.

The variable damping element 600 may have other forms and/or configurations. For example, the variable damping element 600 may be formed from multiple different materials distributed along the longitudinal axis 142, such that the vibrations (e.g., wavelength; acoustic frequency) generated by the initial contacts vary based on the locations of the initial contacts. Similar effects and variation in the vibrations may be achieved in other ways. For example, the deck plates 212 and/or the hoods 218 may be formed from multiple different materials and/or have varying dimensions along the longitudinal axis 142 (e.g., the deck plates 212 may have a variable width relative to the lateral axis 140 between the first end and the second end of the deck plates 212), such that the vibrations (e.g., wavelength; acoustic frequency) generated by the initial contacts vary based on the locations of the initial contacts. As another example, the deck plates 212 and/or the hoods 218 may be split into multiple sections (e.g., segmented), and each section of the multiple sections may be coupled to a respective sensor (e.g., knock sensor, vibration sensor).

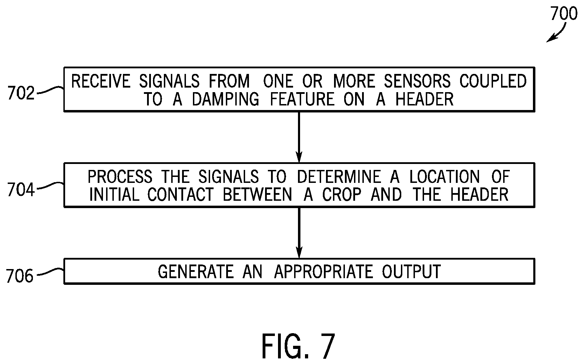

FIG. 7 is a flowchart of an embodiment of a method 700 for determining an impact location on a header, such as the header of FIG. 2. The method 700 may be performed via the controller disclosed herein, or another suitable device. Further, the method 700 may be performed differently in additional or alternative embodiments. For instance, additional steps may be performed with respect to the method 700, and/or certain steps of the method 700 may be modified, removed, performed in a different order, or a combination thereof. The method 700 may be performed based on data received from the sensors of FIGS. 4 and 5, and/or based on data received from the sensors of FIG. 6, and/or based on other types of data (e.g., detected loose or flying kernels, detected stalks at the rear end of the pair of deck plates 212).

At block 702, the controller may receive signals from one or more sensors coupled to (e.g., directly or indirectly) a damping feature on a header. In some embodiments, the one or more sensors may include a first sensor (e.g., knock sensor; vibration sensor) and a second sensor (e.g., knock sensor; vibration sensor) coupled to a plastic or non-metal component of the header, such as a hood of the header. For example, the first sensor may be coupled to the hood at a first location of the hood (e.g., proximate a rearward edge of the hood relative to the direction of travel) and the second sensor may be coupled to the hood at a second location of the hood (e.g., proximate a forward edge of the hood relative to the direction of travel). Thus, the first sensor and the second sensor are separated from one another by a distance (e.g., along the longitudinal axis). The hood, which acts as the damping feature, effects a variation in vibrations measured by the first sensor and the second sensor as the location of the initial contact with the pair of deck plates relative to the longitudinal axis of the header changes. During harvesting operations, the crop may strike and make initial contact with the hood (or some component coupled to the hood, such as one of the deck plates) at a location (e.g., impact location). In response to the initial contact, the first sensor and the second sensor detect vibrations and generate respective signals based on the vibrations.

In some embodiments, the one or more sensors may include a first sensor (e.g., measurement sensor; knock sensor; vibration sensor) and a second sensor (e.g., reference sensor; knock sensor; vibration sensor) each coupled to a respective deck plate of the pair of deck plates of a row unit of the header. A variable damping element may be applied to the respective deck plate with the first sensor. For example, the variable damping element 600 may be a foam or rubber pad (e.g., tapered foam or rubber pad) that is adhered to the deck plate. A thickness of the variable damping element varies between a first end and a second end of the variable damping element. During harvesting operations, the crop may strike and make initial contact with the deck plates at a location (e.g., impact location). In response to the initial contact, the first sensor and the second sensor detect vibrations and generate respective signals based on the vibrations.

At block 704, the controller may process the signals to determine the location of initial contact between the crop and the header (e.g., the deck plates of a row unit of the header). For example, the controller may process the signals from the first and second sensors on the hood of the header. In such cases, if the first sensor is closer to the location, a respective amplitude of a first peak of a first signal generated by the first sensor due to the initial contact is greater than a respective amplitude of a second peak of a second signal generated by the second sensor due to the initial contact. The controller may process (e.g., using one or more algorithms) the first signal and the second signal (e.g., analyze respective amplitudes of the first peak and the second peak) to determine the location of the initial contact.

As another example, the controller may process the signals from the first and second sensors on the pair of deck plates with the variable damping element. Due to the variable damping element, the first sensor generates signals with peaks of substantially different amplitudes for different locations of initial contact (e.g., due to the difference in the thickness of the variable damping element, a level of damping varies with position along the deck plates). As noted herein, the reference signal may be used to scale, adjust, or otherwise account for the changes in size of the crop, stalk roll, speed, and so on so that the peaks in the signals generated by the first sensor can be analyzed to accurately determine the location of the initial contact between the crop and the header. The controller may process (e.g., using one or more algorithms) the first signal and the second signal (e.g., analyze respective amplitudes of the first peak, with consideration of the second peak for reference) to determine the location of the initial contact.

At block 706, the controller may generate an appropriate output. In some embodiments, the appropriate output may include a visual alarm and/or an audible alarm. In some embodiments, the appropriate output may include control signals, such as control signals to the actuators to adjust the position and/or the spatial orientation of the header and/or a rotation rate of the pair of stalk rollers. For example, in response to the location of the initial contact being rearward of a target impact region of the pair of deck plates, the controller may instruct output of the visual alarm and/or the audible alarm, raise the header relative to the chassis of the agricultural system and the ground, and/or reduce an angle between the header and the ground. In some embodiments, the controller may provide the control signals to manipulate the actuators based on the location of the initial contact, but also accounting for other operational features (e.g., detected loose or flying kernels, detected stalks at the rear end of the pair of deck plates 212) to essentially optimize (e.g., aim to optimize; increase production rates and/or yield of the crop) the harvesting operations. The controller may repeat the method 700 as the agricultural system harvests crops in a field. It should be appreciated that aspects of various examples may be combined, such as use of the variable damping material with the hood, for example.

## Claims

1. An impact sensor system for a header (200) of an agricultural system (100), wherein the impact sensor system comprises:
a damping feature (218, 600) configured to couple to the header (200) to attenuate vibrations due to initial contact between a crop and the header (200) to form attenuated vibrations;
one or more sensors (220, 222, 602, 604) configured to couple to the header (200) and to generate signals in response to detection of the attenuated vibrations; and
a controller (510) configured to:
receive the signals;
**characterized in that** the controller is further configured to
process the signals to determine a location of the initial contact between the crop and the header (200).

2. The impact sensor system of claim 1, wherein the damping feature (218, 600) comprises a hood (218) positioned adjacent at least one row unit (204).

3. The impact sensor system of any of claims 1 to 2, wherein the damping feature (218, 600) is formed from a plastic material, a foam material, a rubber material, or other non-metal material.

4. The impact sensor system of any of claims claim 1 to 3, wherein the damping feature (218, 600) comprises a variable damping element (600).

5. The impact sensor system of claim 4, wherein the variable damping element (600) comprises a tapered foam pad or a tapered rubber pad.

6. The impact sensor system of any of claims 4 to 5, wherein the variable damping element (600) is configured to couple to a deck plate (212) of the header (200).

7. The impact sensor system of claim 6, wherein the variable damping element (600) provides a variable level of attenuation along a length of the deck plate (212) of the header (200).

8. The impact sensor system of any of claims 4 to 5, wherein the variable damping element (600) is integrated into or is configured to couple to a hood (218) positioned adjacent at least one row unit (204).

9. The impact sensor system of any of claims 1 to 3, wherein the one or more sensors (220, 222, 602, 604) comprises a first sensor (220, 602) and a second sensor (222, 604) configured to be spaced apart along a longitudinal axis of the header (200).

10. The impact sensor system of any of claims 1 to 7, wherein the one or more sensors (220, 222, 602, 604) comprises a first sensor (602) positioned on a deck plate (212) of a row unit (204), and the impact sensor system comprises a second sensor (604) positioned on another deck plate (212) of the row unit (204) to provide a reference signal.

11. The impact sensor system of any of claims 1 to 10, wherein the controller (510) is configured to provide an appropriate output based on the location of the initial contact being outside of a target impact region, wherein the appropriate output comprises one or more alarms, one or more control signals to adjust the header (200), or both.

12. A method, comprising:
operating a header (200) to harvest crops as the header travels through a field;
damping, via a damping feature (218, 600) coupled to the header (200), vibrations generated due to an initial contact between a portion of the crops and the header (200); and
generating, via one or more sensors (220, 222, 602, 604) coupled to the header (200), signals indicative of the vibrations after the damping via the damping feature (218, 600); **characterized by**
processing, via one or more processors (512), the signals to determine a location of the initial contact between the portion of the crop and the header (200).

13. The method of claim 12, wherein the damping comprises providing a variable level of damping based on the location of the initial contact.

14. The method of any of claims 12 to 13, wherein the one or more sensors (220, 222, 602, 604) comprises a first sensor (602) positioned on a deck plate (212) of a row unit (204) and a second sensor (604) positioned on another deck plate (212) of the row unit (204), and the method comprises processing respective signals generated by the second sensor (604) as reference signals.

15. The method of any of claims 12 to 14, comprising instructing, via the one or more processors (512), an appropriate output based on the location of the initial contact being outside of a target impact region, wherein the appropriate output comprises one or more alarms, one or more control signals to adjust the header (200), or both.

## Patentansprüche

1. Auftreffsensorsystem für einen Erntevorsatz (200) eines landwirtschaftlichen Systems (100), wobei das Auftreffsensorsystem umfasst:
eine Dämpfungseinrichtung (218, 600), die dazu eingerichtet ist, mit dem Erntevorsatz (200) verbunden zu sein, um Vibrationen aufgrund eines Erstkontakts zwischen einem Erntegut und dem Erntevorsatz (200) zu dämpfen, um gedämpfte Vibrationen zu erzeugen;
einen oder mehrere Sensoren (220, 222, 602, 604), die dazu eingerichtet sind, mit dem Erntevorsatz (200) verbunden zu sein und in Reaktion auf das Erfassen der gedämpften Vibrationen Signale zu erzeugen; und
eine Steuereinrichtung (510), die dazu eingerichtet ist, die Signale zu empfangen;
**dadurch gekennzeichnet, dass** die Steuereinrichtung weiterhin dazu eingerichtet ist, die Signale zu verarbeiten, um eine Position des Erstkontakts zwischen dem Erntegut und dem Erntevorsatz (200) zu bestimmen.

2. Auftreffsensorsystem nach Anspruch 1, wobei die Dämpfungseinrichtung (218, 600) eine Haube (218) umfasst, die benachbart zu mindestens einer Reiheneinheit (204) angeordnet ist.

3. Auftreffsensorsystem nach einem der Ansprüche 1 oder 2, wobei die Dämpfungseinrichtung (218, 600) aus einem Kunststoffmaterial, einem Schaumstoffmaterial, einem Gummimaterial oder einem anderen nichtmetallischen Material gebildet ist.

4. Auftreffsensorsystem nach einem der Ansprüche 1 bis 3, wobei die Dämpfungseinrichtung (218, 600) ein variables Dämpfungselement (600) umfasst.

5. Auftreffsensorsystem nach Anspruch 4, wobei das variable Dämpfungselement (600) ein sich verjüngendes Schaumstoffpolster oder ein sich verjüngendes Gummipolster umfasst.

6. Auftreffsensorsystem nach einem der Ansprüche 4 bis 5, wobei das variable Dämpfungselement (600) dazu eingerichtet ist, mit einer Deckplatte (212) des Erntevorsatzes (200) verbunden zu sein.

7. Auftreffsensorsystem nach Anspruch 6, wobei das variable Dämpfungselement (600) ein variables Maß an Dämpfung entlang einer Länge der Deckplatte (212) des Erntevorsatzes (200) bereitstellt.

8. Auftreffsensorsystem nach einem der Ansprüche 4 bis 5, wobei das variable Dämpfungselement (600) in eine Haube (218), die benachbart zu mindestens einer Reiheneinheit (204) angeordnet ist, integriert ist oder dazu eingerichtet ist, mit dieser verbunden zu sein.

9. Auftreffsensorsystem nach einem der Ansprüche 1 bis 3, wobei der eine oder die mehreren Sensoren (220, 222, 602, 604) einen ersten Sensor (220, 602) und einen zweiten Sensor (222, 604) umfassen, die dazu eingerichtet sind, entlang einer Längsachse des Erntevorsatzes (200) beabstandet angeordnet zu sein.

10. Auftreffsensorsystem nach einem der Ansprüche 1 bis 7, wobei der eine oder die mehreren Sensoren (220, 222, 602, 604) einen ersten Sensor (602) umfassen, der an einer Deckplatte (212) einer Reiheneinheit (204) angeordnet ist, und das Auftreffsensorsystem einen zweiten Sensor (604) umfasst, der an einer anderen Deckplatte (212) der Reiheneinheit (204) angeordnet ist, um ein Referenzsignal bereitzustellen.

11. Auftreffsensorsystem nach einem der Ansprüche 1 bis 10, wobei die Steuereinrichtung (510) dazu eingerichtet ist, eine geeignete Ausgabe bereitzustellen, wenn sich die Position des Erstkontakts außerhalb eines Ziel-Auftreffbereichs befindet, wobei die geeignete Ausgabe einen oder mehrere Alarme, ein oder mehrere Steuersignale zur Anpassung des Erntevorsatzes (200) oder beides umfasst.

12. Verfahren, umfassend:
Betreiben eines Erntevorsatzes (200) zum Ernten von Erntegut, während sich der Erntevorsatz über ein Feld bewegt;
Dämpfen von Vibrationen, die durch einen Erstkontakt zwischen einem Teil des Ernteguts und dem Erntevorsatz (200) erzeugt werden, mittels einer mit dem Erntevorsatz (200) verbundenen Dämpfungseinrichtung (218, 600); und
Erzeugen von Signalen, die kennzeichnend sind für die Vibrationen nach der Dämpfung durch die Dämpfungseinrichtung (218, 600) mittels eines oder mehrerer mit dem Erntevorsatz (200) verbundenen Sensoren (220, 222, 602, 604);
**gekennzeichnet durch**
Verarbeiten der Signale zur Bestimmung einer Position des Erstkontakts zwischen dem Teil des Ernteguts und dem Erntevorsatz (200) mittels eines oder mehrerer Prozessoren (512).

13. Verfahren nach Anspruch 12, wobei das Dämpfen das Bereitstellen eines variablen Maßes an Dämpfung in Abhängigkeit von der Position des Erstkontakts umfasst.

14. Verfahren nach einem der Ansprüche 12 bis 13, wobei der eine oder die mehreren Sensoren (220, 222, 602, 604) einen ersten Sensor (602) umfassen, der auf einer Deckplatte (212) einer Reiheneinheit (204) angeordnet ist, und einen zweiten Sensor (604) umfassen, der auf einer anderen Deckplatte (212) der Reiheneinheit (204) angeordnet ist, und das Verfahren das Verarbeiten entsprechender Signale umfasst, die von dem zweiten Sensor (604) als Referenzsignale erzeugt werden.

15. Verfahren nach einem der Ansprüche 12 bis 14, umfassend das Anweisen einer geeigneten Ausgabe basierend auf der Position des Erstkontakts außerhalb eines Ziel-Auftreffbereichs mittels des einen oder der mehreren Prozessoren (512), wobei die geeignete Ausgabe einen oder mehrere Alarme, ein oder mehrere Steuersignale zur Anpassung des Erntevorsatzes (200) oder beides umfasst.

## Revendications

1. Un système de capteur d'impact pour un organe de coupe (200) d'un système agricole (100), dans lequel le système de capteur d'impact comprend :
un élément d'amortissement (218, 600) configuré pour être couplé à l'organe de coupe (200) pour atténuer les vibrations dues au contact initial entre une culture et l'organe de coupe (200) afin de former des vibrations atténuées ;
un ou plusieurs capteurs (220, 222, 602, 604) configurés pour être couplés à l'organe de coupe (200) et pour générer des signaux en réponse à la détection des vibrations atténuées ; et
un contrôleur (510) configuré pour : recevoir les signaux ;
**caractérisé en ce que** le contrôleur est en outre configuré pour traiter les signaux afin de déterminer un emplacement du contact initial entre la récolte et l'organe de coupe (200).

2. Le système de détection d'impact selon la revendication 1, dans lequel l'élément d'amortissement (218, 600) comprend un carter (218) positionné à côté d'au moins une unité de rang (204).

3. Le système de détection d'impact selon l'une quelconque des revendications 1 à 2, dans lequel l'élément d'amortissement (218, 600) est formé à partir d'un matériau plastique, d'un matériau en mousse, d'un matériau en caoutchouc ou d'un autre matériau non métallique.

4. Le système de détection d'impact selon l'une quelconque des revendications 1 à 3, dans lequel l'élément d'amortissement (218, 600) comprend un élément d'amortissement variable (600).

5. Le système de détection d'impact selon la revendication 4, dans lequel l'élément d'amortissement variable (600) comprend un patin en mousse conique ou un patin en caoutchouc conique.

6. Le système de détection d'impact selon l'une quelconque des revendications 4 à 5, dans lequel l'élément d'amortissement variable (600) est configuré pour être couplé à une plaque de tablier (212) de l'organe de coupe (200).

7. Le système de détection d'impact selon la revendication 6, dans lequel l'élément d'amortissement variable (600) fournit un niveau variable d'atténuation sur une longueur de la plaque de tablier (212) de l'organe de coupe (200).

8. Le système de détection d'impact selon l'une quelconque des revendications 4 à 5, dans lequel l'élément d'amortissement variable (600) est intégré ou configuré pour être couplé à un carter (218) positionné à côté d'au moins une unité de rang (204).

9. Le système de détection d'impact selon l'une quelconque des revendications 1 à 3, dans lequel le ou les capteurs (220, 222, 602, 604) comprennent un premier capteur (220, 602) et un deuxième capteur (222, 604) configurés pour être espacés le long d'un axe longitudinal de l'organe de coupe (200).

10. Le système de capteurs d'impact selon l'une quelconque des revendications 1 à 7, dans lequel le ou les capteurs (220, 222, 602, 604) comprennent un premier capteur (602) positionné sur une plaque de tablier (212) d'une unité de rang (204), et le système de capteurs d'impact comprend un deuxième capteur (604) positionné sur une autre plaque de tablier (212) de l'unité de rang (204) pour fournir un signal de référence.

11. Le système de capteur d'impact selon l'une quelconque des revendications 1 à 10, dans lequel le contrôleur (510) est configuré pour fournir une sortie appropriée en fonction de l'emplacement du contact initial en dehors d'une zone d'impact cible, dans lequel la sortie appropriée comprend une ou plusieurs alarmes, un ou plusieurs signaux de commande pour ajuster l'organe de coupe (200), ou les deux.

12. Un procédé comprenant :
le fonctionnement d'un organe de coupe (200) pour récolter des cultures alors que l'organe de coupe se déplace dans un champ ;
l'amortissement, par le biais d'un élément d'amortissement (218, 600) couplé à l'organe de coupe (200), des vibrations générées en raison d'un contact initial entre une partie des récoltes et l'organe de coupe (200) ; et
la génération, par le biais d'un ou de plusieurs capteurs (220, 222, 602, 604) couplés à l'organe de coupe (200), de signaux indiquant les vibrations après l'amortissement par le biais de l'élément d'amortissement (218, 600) ;
**caractérisé en ce que**
le traitement, par le biais d'un ou de plusieurs processeurs (512), des signaux pour déterminer un emplacement du contact initial entre la partie de la récolte et l'organe de coupe (200).

13. Le procédé selon la revendication 12, dans lequel l'amortissement comprend la fourniture d'un niveau variable d'amortissement en fonction de l'emplacement du contact initial.

14. Le procédé selon l'une quelconque des revendications 12 à 13, dans lequel le ou les capteurs (220, 222, 602, 604) comprennent un premier capteur (602) positionné sur une plaque de tablier (212) d'une unité de rang (204) et un deuxième capteur (604) positionné sur une autre plaque de tablier (212) de l'unité de rang (204), et le procédé comprend le traitement des signaux respectifs générés par le deuxième capteur (604) comme signaux de référence.

15. Le procédé selon l'une quelconque des revendications 12 à 14, comprenant la communication d'instruction, par le biais d'un ou de plusieurs processeurs (512), à une sortie appropriée en fonction de l'emplacement du contact initial en dehors d'une zone d'impact cible, dans laquelle la sortie appropriée comprend une ou plusieurs alarmes, un ou plusieurs signaux de commande pour ajuster l'organe de coupe (200), ou les deux.
